# EUROPEAN PATENT APPLICATION

(11) **EP 4 675 783 A1**
(43) Date of publication of application: **07.01.2026**
(21) Application number: 24763402.5
(22) Date of filing: 11.01.2024
(51) Int. Cl.: H01M 50/186, H01M 10/04, H01M 10/052, H01M 10/0585, H01M 50/105, H01M 50/119, H01M 50/121, H01M 50/129, H01M 50/184, H01M 50/193, H01M 50/548, H01M 50/555

(54) **LAYERED BATTERY**

(30) Priority: 01.03.2023 JP 2023030694
(71) Applicant: TOYOTA JIDOSHA KABUSHIKI KAISHA, Toyota-shi Aichi 471-8571 (JP)
(72) Inventor: SHINTANI, Kodai, Toyota-shi, Aichi 471-8571 (JP); SAEKI, Yuya, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: D Young & Co LLP
(86) International application number: PCT/JP2024/000355
(87) International publication number: WO 2024/180917

(57) **Abstract**

A stacked-type battery includes: a stacked-electrode assembly including a plurality of electrodes stacked in a stacking direction; and an exterior package that accommodates the stacked-electrode assembly, wherein the exterior package includes a first conductive plate (18) provided on one surface of the stacked-electrode assembly in the stacking direction, a second conductive plate provided on the other surface of the stacked-electrode assembly in the stacking direction, a first laminate sheet portion joined to a peripheral edge of the first conductive plate, and a second laminate sheet portion joined to a peripheral edge of the second conductive plate, each of the first laminate sheet portion and the second laminate sheet portion includes one or more first sheets (31) and one or more second sheets (32), and the one or more first sheets (31) and the one or more second sheets (32) cover each of the peripheral edge of the first conductive plate (18) and the peripheral edge of the second conductive plate together in a state in which a part of each of the second sheets (32) is overlapped with a part of a corresponding one of the first sheets (31).

## Description

### TECHNICAL FIELD

The present disclosure relates to a stacked-type battery.

### BACKGROUND ART

As a conventional stacked-type battery, Japanese Patent Laying-Open No. 2004-134210 (PTL 1) discloses a configuration in which a stacked-electrode assembly in which bipolar electrodes are stacked is sealed by a laminate sheet provided with an opening at its center so as to extract current from each of an uppermost layer and a lowermost layer of the stacked-electrode assembly.

### CITATION LIST

### PATENT LITERATURE

PTL 1: Japanese Patent Laying-Open No. 2004-134210

### SUMMARY OF INVENTION

### TECHNICAL PROBLEM

As described in PTL 1, when the laminate sheet provided with the opening at its center is used, the center of the sheet, which has a rectangular shape, is cut off, thus resulting in a complicated production process. Moreover, the cut off central portion of the laminate sheet is wasted, thus resulting in increased production cost.

The present disclosure has been made in view of the above problem, and an object of the present disclosure is to provide a stacked-type battery allowing for reduced production cost while allowing current to be extracted from each of both ends of an electrode in a stacking direction.

### SOLUTION TO PROBLEM

A stacked-type battery based on the present disclosure includes: a stacked-electrode assembly including a plurality of electrodes stacked in a stacking direction; and an exterior package that accommodates the stacked-electrode assembly. The exterior package includes a first conductive plate provided on one surface of the stacked-electrode assembly in the stacking direction, a second conductive plate provided on the other surface of the stacked-electrode assembly in the stacking direction, a first laminate sheet portion joined to a peripheral edge of the first conductive plate, and a second laminate sheet portion joined to a peripheral edge of the second conductive plate. Each of the first laminate sheet portion and the second laminate sheet portion includes one or more first sheets and one or more second sheets. The one or more first sheets and the one or more second sheets cover each of the peripheral edge of the first conductive plate and the peripheral edge of the second conductive plate together in a state in which a part of each of the second sheets is overlapped with a part of a corresponding one of the first sheets.

According to the above configuration, since the first conductive plate is provided on one surface of the electrode stack in the stacking direction and the second conductive plate is provided on the other surface of the electrode stack in the stacking direction, current can be extracted from the both sides in the stacking direction via the first conductive plate and the second conductive plate. Moreover, the first sheets and the second sheets cut in advance are combined and joined to each of the peripheral edge of the first conductive plate and the peripheral edge of the second conductive plate so as to cover each of the peripheral edge of the first conductive plate and the peripheral edge of the second conductive plate together in the state in which a part of each of the second sheets is overlapped with a part of a corresponding one of the first sheets. Therefore, when forming the exterior package, the central portion of a laminate sheet having a rectangular shape does not need to be cut off, thereby reducing loss of the laminate sheet and suppressing production cost.

In the stacked-type battery based on the present disclosure, each of the first sheets may have a first metal layer and a sealant resin layer provided on each of both surfaces of the first metal layer. Each of the second sheets may have a second metal layer having a first main surface and a second main surface, and a first resin layer provided on the first main surface side. The first resin layer may have meltability to the sealant resin layer. The one or more first sheets and the one or more second sheets may cover each of the peripheral edge of the first conductive plate and the peripheral edge of the second conductive plate together in a state in which a part of each of the first resin layers is overlapped with a part of a corresponding one of the sealant resin layers. The sealant resin layer of each of the first sheets and the first resin layer of a corresponding one of the second sheets may be melted to each other.

According to the above configuration, the sealant resin layer is melted to the first resin layer overlapped with a part of the sealant resin layer, thereby improving sealing performance of the exterior package.

In the stacked-type battery based on the present disclosure, a side surface of the stacked-electrode assembly may be sealed by a sealing body. Each of the first conductive plate and the second conductive plate may have a plurality of angular portions when viewed in the stacking direction. At least one of the first laminate sheet portion and the second laminate sheet portion may have an embossed portion to accommodate the stacked-electrode assembly and the sealing body. The plurality of second sheets may be disposed to cover the plurality of angular portions. Each of the second sheets may have a second resin layer provided on the second main surface side. The second resin layer may be a resin layer having a higher strength than a strength of the sealant resin layer or the first resin layer. A corner portion of the embossed portion may be formed in the second sheet.

According to the above configuration, in the second sheet in which the corner portion of the embossed portion is formed, the second resin layer having the higher strength than that of each of the sealant layer of the first sheet and the first resin layer provided on the first main surface is provided on the second main surface. Therefore, when the first laminate sheet portion and the second laminate sheet portion are embossed, it is possible to further suppress breakage of the first laminate sheet portion and the second laminate sheet portion (specifically, the second sheet) at positions corresponding to the angular portions.

In the stacked-type battery based on the present disclosure, a resin layer having meltability to the sealant resin layer and the first resin layer may be disposed between each of the one or more first sheets and the one or more second sheets and each of the peripheral edge of the first conductive plate and the peripheral edge of the second conductive plate. Each of the one or more first sheets and the one or more second sheets may have an inner-side end portion on a side on which each of the peripheral edge of the first conductive plate and the peripheral edge of the second conductive plate is located. When viewed in the stacking direction, an inner edge portion of the resin layer may be located on a center side of the stacked-electrode assembly with respect to the inner-side end portion.

According to the above configuration, even when a sufficient creepage distance cannot be secured between each of the first conductive plate and the second conductive plate and the first metal layer or the second metal layer, insulation between each of the first conductive plate and the second conductive plate and the first metal layer or the second metal layer can be secured by the resin layer.

In the stacked-type battery based on the present disclosure, the stacked-electrode assembly may include a positive-electrode terminal electrode located on one side in the stacking direction and a negative-electrode terminal electrode located on the other side in the stacking direction. The positive-electrode terminal electrode may include a current collector plate having a first surface on the one side in the stacking direction. The negative-electrode terminal electrode may include a current collector plate having a second surface on the other side in the stacking direction. The first conductive plate may be disposed in abutment with the first surface so as to be electrically connected to the positive-electrode terminal electrode. The second conductive plate may be disposed in abutment with the second surface so as to be electrically connected to the negative-electrode terminal electrode.

In general, in the case where the first laminate sheet portion and the second laminate sheet portion are directly joined to the stacked-electrode assembly (specifically, the current collector plate of the positive-electrode terminal electrode and the current collector plate of the negative-electrode terminal electrode), the stacked-electrode assembly is discarded altogether when a failure of joining occurs.

According to the above configuration, the first conductive plate and the second conductive plate are constituted of members different from the current collector plate of the positive-electrode terminal electrode and the current collector plate of the negative-electrode terminal electrode. Therefore, when a failure of joining occurs at the time of joining the first laminate sheet portion and the second laminate sheet portion to the first conductive plate and the second conductive plate, the stacked-electrode assembly does not need to be discarded.

In the stacked-type battery based on the present disclosure, each of the first conductive plate and the second conductive plate may have a rectangular shape including a pair of first side portions facing each other in a first direction and a pair of second side portions facing each other in a second direction orthogonal to the first direction. In each of the first conductive plate and the second conductive plate, the first sheets may be disposed on one side and the other side in the first direction along the first side portions between the pair of second side portions. In each of the first conductive plate and the second conductive plate, the second sheets may be disposed on one side and the other side in the second direction along the second side portions so as to cover angular portions, which are located on the both sides in the first direction, of a corresponding one of the first conductive plate and the second conductive plate.

According to the above configuration, since the first sheets are disposed along the pair of first side portions and the second sheets are disposed along the pair of second side portions, each of the peripheral edges of the first conductive plate and the second conductive plate can be efficiently surrounded by the four sheets. Therefore, loss of the laminate sheet can be further reduced as compared with a configuration in which the central portion of a laminate sheet having a rectangular shape is cut off when forming the exterior package.

In the stacked-type battery based on the present disclosure, each of the first sheets may include a first metal layer extending along the second direction. Each of both end surfaces of the first metal layer in the second direction may be covered with the resin layer.

According to the above configuration, since each of the both end surfaces of the first metal layer is covered with the resin layer, it is possible to suppress a short circuit via the both end surfaces of the first metal layer.

In the stacked-type battery based on the present disclosure, each of the first conductive plate and the second conductive plate may have a rectangular shape including a pair of first side portions facing each other in a first direction and a pair of second side portions facing each other in a second direction orthogonal to the first direction. Each of the first sheets may be disposed to protrude outward in the first direction from a corresponding one of a plurality of angular portions in each of the first conductive plate and the second conductive plate. The plurality of second sheets may include a pair of first-side-portion-side sheets disposed along the pair of first side portions and a pair of second-side-portion-side sheets disposed along the pair of second side portions in each of the first conductive plate and the second conductive plate.

According to the above configuration, each of the peripheral edges of the first conductive plate and the second conductive plate can be surrounded by the plurality of first sheets and the plurality of second sheets while reducing the area of each of the first sheets.

### ADVANTAGEOUS EFFECTS OF INVENTION

According to the present disclosure, it is possible to provide a stacked-type battery in which a sealing property is maintained in an excellent manner while improving formability of a laminate sheet.

### BRIEF DESCRIPTION OF DRAWINGS

Fig. 1 is a perspective view of a stacked-type battery according to a first embodiment.
Fig. 2 is a cross sectional view along a line II-II shown in Fig. 1.
Fig. 3 is a cross sectional view along a line III-III shown in Fig. 1.
Fig. 4 is a cross sectional view of a second sheet with a region surrounded by a chain double-dashed line IV in Fig. 3 being shown in an enlarged manner.
Fig. 5 is a diagram showing a step of disposing resin layers on a peripheral edge of a first conductive plate in a step of producing a first laminate sheet portion according to the first embodiment.
Fig. 6 is a diagram showing a step of disposing first sheets in the step of producing the first laminate sheet portion according to the first embodiment.
Fig. 7 is a diagram showing a step of disposing second sheets in the step of producing the first laminate sheet portion according to the first embodiment.
Fig. 8 is a diagram showing a step of disposing resin layers on a peripheral edge of a first conductive plate in a step of producing a first laminate sheet portion according to a second embodiment.
Fig. 9 is a diagram showing a step of disposing first sheets in the step of producing the first laminate sheet portion according to the second embodiment.
Fig. 10 is a diagram showing a step of disposing second sheets in the step of producing the first laminate sheet portion according to the second embodiment.
Fig. 11 is a cross sectional view along a line XI-XI shown in Fig. 10.
Fig. 12 is a diagram showing a step of disposing first sheets in a step of producing a first laminate sheet portion according to a third embodiment.
Fig. 13 is a diagram showing a step of disposing second sheets in the step of producing the first laminate sheet portion according to the third embodiment.
Fig. 14 is a diagram showing a step of disposing first sheets in a step of producing a first laminate sheet portion according to a fourth embodiment.
Fig. 15 is a diagram showing a step of disposing second sheets in the step of producing the first laminate sheet portion according to the fourth embodiment.
Fig. 16 is a cross sectional view of a stacked-type battery according to a fifth embodiment.
Fig. 17 is a cross sectional view of a second sheet with a region surrounded by XVII shown in Fig. 16 being shown in an enlarged manner.
Fig. 18 is a cross sectional view of a stacked-type battery according to a sixth embodiment.

### DESCRIPTION OF EMBODIMENTS

Hereinafter, embodiments of the present disclosure will be described in detail with reference to figures. It should be noted that in the following embodiments, the same or common portions are denoted by the same reference characters in the figures, and will not be described repeatedly.

### (First Embodiment)

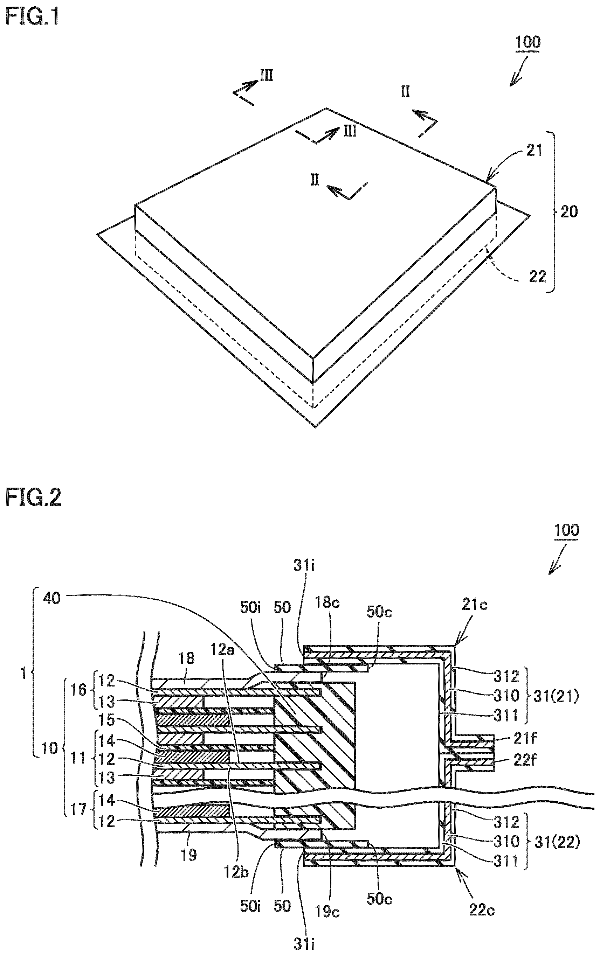

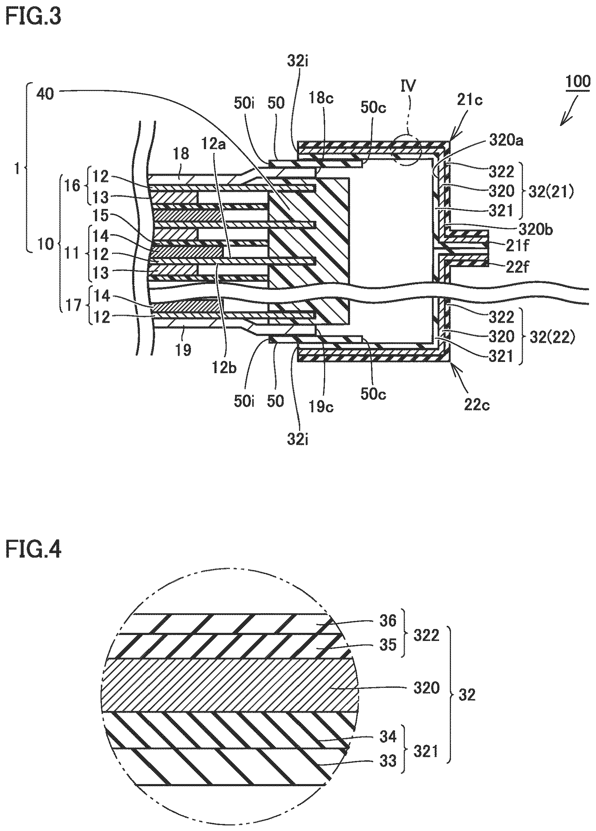

Fig. 1 is a perspective view of a stacked-type battery according to a first embodiment. Fig. 2 is a cross sectional view along a line II-II shown in Fig. 1. Fig. 3 is a cross sectional view along a line III-III shown in Fig. 1. A stacked-type battery 100 according to the first embodiment will be described with reference to Figs. 1 to 3.

As shown in Figs. 1 to 3, stacked-type battery 100 according to the first embodiment includes: a power storage module 1 having a stacked-electrode assembly 10 in which a plurality of electrodes (electrode plates 11) described later are stacked in a stacking direction, and a resin sealing body 40; and an exterior package 20 that accommodates power storage module 1. Exterior package 20 is electrically connected to below-described terminal electrodes of stacked-electrode assembly 10, and is provided to extract current to outside in the stacking direction. Exterior package 20 includes a first conductive plate 18, a second conductive plate 19, a first laminate sheet portion 21, a second laminate sheet portion 22, and resin layers 50. Stacked-type battery 100 is, for example, a secondary battery such as a lithium ion battery.

Stacked-electrode assembly 10 includes a plurality of electrode plates 11, a plurality of separators 15, a positive-electrode terminal electrode 16, and a negative-electrode terminal electrode 17. The plurality of electrode plates 11, positive-electrode terminal electrode 16, and negative-electrode terminal electrode 17 are stacked in the stacking direction with separators 15 being interposed therebetween.

Each of separators 15 is formed to have a sheet shape. Examples of separator 15 include: a porous film composed of a polyolefin-based resin such as polyethylene (PE) or polypropylene (PP); a woven fabric or nonwoven fabric composed of polypropylene, methyl cellulose, or the like; and the like. Separator 15 may be reinforced with a vinylidene difluoride resin compound.

The plurality of electrode plates 11 are provided between positive-electrode terminal electrode 16 and negative-electrode terminal electrode 17. Each of electrode plates 11 is, for example, a bipolar electrode. Electrode plate 11 includes a current collector 12, a positive electrode layer 13, and a negative electrode layer 14.

Current collector 12 may include, for example, at least one selected from a group consisting of aluminum (Al), stainless steel, nickel (Ni), chromium (Cr), platinum (Pt), niobium (Nb), iron (Fe), titanium (Ti), and zinc (Zn). Moreover, current collector 12 may be formed by providing plating onto a surface of a metal foil.

Current collector 12 has a first surface 12a located on one side in the stacking direction, and a second surface 12b located on the other side in the stacking direction. Negative electrode layer 14 is provided on first surface 12a. Positive electrode layer 13 is provided on second surface 12b.

Positive-electrode terminal electrode 16 is located on the one side in the stacking direction. Positive-electrode terminal electrode 16 includes a current collector 12 and a positive electrode layer 13. Specifically, in positive-electrode terminal electrode 16, no negative electrode layer 14 and no positive electrode layer 13 are provided on first surface 12a of current collector 12, and positive electrode layer 13 is provided on second surface 12b of current collector 12. First conductive plate 18 is disposed on first surface 12a of current collector 12 in positive-electrode terminal electrode 16.

Negative-electrode terminal electrode 17 is located on the other side in the stacking direction. Negative-electrode terminal electrode 17 includes a current collector 12 and a negative electrode layer 14. Specifically, in negative-electrode terminal electrode 17, negative electrode layer 14 is provided on first surface 12a of current collector 12, and no negative electrode layer 14 and no positive electrode layer 13 are provided on second surface 12b of current collector 12. Second conductive plate 19 is disposed on second surface 12b of current collector 12 in negative-electrode terminal electrode 17.

Positive electrode layer 13 is formed by applying a positive electrode active material onto second surface 12b. As the positive electrode active material, for example, a material that can store and release charge carriers such as lithium ions can be employed. Specifically, as the positive electrode active material, a material usable as a positive electrode active material of a lithium ion secondary battery can be employed, such as a lithium ion composite metal oxide having a lamellar rock salt structure, a metal oxide having a spinel structure, or a polyanion-based compound. Moreover, two or more types of positive electrode active materials may be used together, and for example, the positive electrode active material may include olivine-type lithium iron phosphate (LiFePO₄).

Negative electrode layer 14 is formed by applying a negative electrode active material onto first surface 12a. As the negative electrode active material, for example, lithium, carbon, a metal compound, an element that can be alloyed with lithium, a compound thereof, or the like can be employed.

It should be noted that in each of the plurality of electrode plates 11, negative-electrode terminal electrode 17, and positive-electrode terminal electrode 16, a peripheral edge portion of current collector 12 is a non-application region on which positive electrode layer 13 and negative electrode layer 14 are not provided.

Resin sealing body 40 is provided to seal the periphery of stacked-electrode assembly 10. Specifically, resin sealing body 40 seals an internal space formed between two adjacent electrode plates 11. An electrolyte solution is injected in the internal space. Resin sealing body 40 is formed by curing a resin member such as a hot melt member, a thermoplastic resin, a thermosetting resin, or a photocurable resin. Resin sealing body 40 is provided at the above-described non-application region.

First conductive plate 18 and second conductive plate 19 are provided to sandwich stacked-electrode assembly 10 in the stacking direction. Specifically, first conductive plate 18 is disposed on first surface 12a of current collector 12 of positive-electrode terminal electrode 16. First conductive plate 18 is disposed in abutment with first surface 12a so as to be electrically connected to positive-electrode terminal electrode 16. First conductive plate 18 functions as a positive electrode terminal of stacked-type battery 100 because first conductive plate 18 is electrically connected to positive-electrode terminal electrode 16. Second conductive plate 19 is disposed on second surface 12b of current collector 12 of negative-electrode terminal electrode 17. Second conductive plate 19 is disposed in abutment with second surface 12b so as to be electrically connected to negative-electrode terminal electrode 17. Second conductive plate 19 functions as a negative electrode terminal of stacked-type battery 100 because second conductive plate 19 is electrically connected to negative-electrode terminal electrode 17. In stacked-type battery 100, current can be extracted from power storage module 1 accommodated therein to the outside via each of first conductive plate 18 functioning as the positive electrode terminal and second conductive plate 19 functioning as the negative electrode terminal without using a tab for extracting current to the outside.

Each of first conductive plate 18 and second conductive plate 19 has a rectangular shape having a plurality of angular portions. The peripheral edges of first conductive plate 18 and second conductive plate 19 are located in resin sealing body 40.

Each of first conductive plate 18 and second conductive plate 19 may include at least one selected from a group consisting of aluminum (Al), stainless steel, nickel (Ni), chromium (Cr), platinum (Pt), niobium (Nb), iron (Fe), titanium (Ti), and zinc (Zn). Moreover, each of first conductive plate 18 and second conductive plate 19 may be formed by providing plating onto a surface of a metal foil.

First laminate sheet portion 21 is joined to the peripheral edge of first conductive plate 18. In the present embodiment, first laminate sheet portion 21 is joined to first conductive plate 18 with resin layer 50 being interposed between first laminate sheet portion 21 and the peripheral edge of first conductive plate 18. Second laminate sheet portion 22 is joined to the peripheral edge of second conductive plate 19. In the present embodiment, second laminate sheet portion 22 is joined to second conductive plate 19 with resin layer 50 being interposed between second laminate sheet portion 22 and the peripheral edge of second conductive plate 19.

A resin material having an insulating property may be used for resin layer 50. For resin layer 50, a resin material that can be welded to first conductive plate 18 or second conductive plate 19 may be used. As resin layer 50, for example, a thermally fusible resin such as polyethylene, polypropylene, modified polyethylene, or modified polypropylene can be employed. Resin layer 50 may have a single-layer structure constituted of the above-described resin or a multilayer structure obtained by stacking a plurality of the above-described resins. When resin layer 50 has the multilayer structure, modified polyethylene or modified polypropylene, each of which has higher adhesion to a metal than polyethylene or polypropylene, can be suitably used for its surface facing each of first conductive plate 18 and second conductive plate 19. Resin layer 50 has a function of preventing a short circuit between first conductive plate 18 or second conductive plate 19 and a first metal layer 310 or second metal layer 320 included in a first sheet 31 or second sheet 32.

The central portion of first conductive plate 18 and the central portion of second conductive plate 19 are exposed regions that are not covered with resin layers 50, first laminate sheet portion 21, and second laminate sheet portion 22. Via each of these exposed regions, current can be directly extracted to the outside from power storage module 1 accommodated therein.

First laminate sheet portion 21 includes a plurality of first sheets 31 and a plurality of second sheets 32. The plurality of first sheets 31 and the plurality of second sheets 32 cover the peripheral edge of first conductive plate 18 together. Second laminate sheet portion 22 includes a plurality of first sheets 31 and a plurality of second sheets 32. The plurality of first sheets 31 and the plurality of second sheets 32 cover the peripheral edge of second conductive plate 19 together.

Each of first sheets 31 has a first metal layer 310 and sealant resin layers 311, 312. First metal layer 310 has a sheet shape. As first metal layer 310, for example, a metal foil such as an Al foil, a Ni foil, a Cu foil, or a stainless steel foil can be used. First metal layer 310 provides moisture permeability resistance, gas permeability resistance, and chemical resistance to first sheet 31. The thickness of first metal layer 310 can be, for example, about 40 µm to about 80 µm. By increasing the thickness of first metal layer 310, formability during below-described embossing can be improved.

Sealant resin layers 311, 312 are provided on both surfaces of first metal layer 310. Specifically, sealant resin layer 311 is provided on the inner surface of first metal layer 310. Sealant resin layer 312 is provided on the outer surface of first metal layer 310.

Each of sealant resin layers 311, 312 has meltability to resin layer 50. For each of resin layer 50 and sealant resin layers 311, 312, for example, a thermally fusible resin such as polyethylene, polypropylene, modified polyethylene, or modified polypropylene can be employed. Each of sealant resin layers 311, 312 may be constituted of one layer or may have a multilayer structure. Each of sealant resin layers 311, 312 functions as a sealing layer of exterior package 20. Moreover, each of sealant resin layers 311, 312 also has a function as an insulating layer, and insulates first laminate sheet portion 21 and second laminate sheet portion 22 from each other when first laminate sheet portion 21 and second laminate sheet portion 22 are joined to each other. It should be noted that the thickness of first sealant resin layer 311 may be comparable to the thickness of second sealant resin layer 312. For example, each of the thickness of first sealant resin layer 311 and the thickness of second sealant resin layer 312 may be about 80 µm. Moreover, since resin layer 50 is provided internal to first sealant resin layer 311 in order to prevent a short circuit with first conductive plate 18 or second conductive plate 19, the thickness of first sealant resin layer 311 may be smaller than the thickness of second sealant resin layer 312. In this case, for example, first sealant resin layer 311 may have a thickness to such an extent that first sealant resin layer 311 can be welded to resin layer 50, and may have a thickness equal to or less than the half of the thickness of second sealant resin layer 312. Specifically, for example, the thickness of first sealant resin layer 311 may be about 30 µm, and the thickness of second sealant resin layer 312 may be about 70 µm. With such a smaller thickness of first sealant resin layer 311 than the thickness of second sealant resin layer 312, an amount of resin included in first sheet 31 can be reduced, thereby reducing production cost of the stacked-type battery.

Fig. 4 is a cross sectional view of the second sheet with a region surrounded by a chain double-dashed line IV in Fig. 3 being shown in an enlarged manner. As shown in Figs. 3 and 4, each of second sheets 32 has a second metal layer 320, a first resin layer 321, and a second resin layer 322. Second metal layer 320 has a sheet shape. Second metal layer 320 has a first main surface 320a and a second main surface 320b. First main surface 320a is a surface facing the inner side (side on which stacked-electrode assembly 10 is located), and second main surface 320b is a surface facing the outer side (side opposite to the side on which stacked-electrode assembly 10 is located). For second metal layer 320, for example, a metal foil such as an Al foil, a Ni foil, a Cu foil, or a stainless steel foil can be used. The thickness of second metal layer 320 may be larger than the thickness of first metal layer 310, or the thickness of second metal layer 320 and the thickness of first metal layer 310 may be the same. The thickness of second metal layer 320 can be, for example, about 60 µm to about 80 µm. With such a thickness, pressure resistance performance and formability of second sheet 32 can be sufficiently secured. Moreover, when the thickness of first metal layer 310 of first sheet 31 is about the same (for example, about 80 µm) as the thickness of second metal layer 320, pressure resistance performance and formability of first sheet 31 can be sufficiently secured.

First resin layer 321 is provided on first main surface 320a. First resin layer 321 has meltability to sealant resin layer 312. For first resin layer 321, for example, a thermally fusible resin such as polyethylene, polypropylene, modified polyethylene, or modified polypropylene can be employed. First resin layer 321 may be constituted of a single layer of polyethylene, polypropylene, modified polyethylene, modified polypropylene, or the like, or may be formed by stacking a plurality of resin layers. In the present embodiment, first resin layer 321 includes a polypropylene layer 33 and a modified polypropylene layer 34.

When first resin layer 321 includes the plurality of resin layers, a resin layer having meltability to sealant resin layer 312 is disposed as its outermost surface. As such a resin layer, first resin layer 321 may be composed of the same resin material as that of each of sealant resin layers 311, 312. Moreover, when the plurality of resin layers are provided, the thicknesses of the resin layers can be substantially the same. For example, the thickness of polypropylene layer 33 disposed as the outermost surface may be about 30 µm, and the thickness of modified polypropylene layer 34 disposed between the polypropylene and second metal layer 320 may be about 30 µm.

Second resin layer 322 is provided on second main surface 320b. Second resin layer 322 may be a resin layer having a higher strength than a strength of sealant resin layer 312 or first resin layer 321. A resin material having non-meltability to sealant resin layer 312 may be used for second resin layer 322. For second resin layer 322, for example, a single layer of polyethylene terephthalate or nylon, or a layer obtained by stacking these can be employed. In the present embodiment, second resin layer 322 includes a nylon layer 35 and a polyethylene terephthalate layer 36. Polyethylene terephthalate layer 36 is located on the outer layer side with respect to nylon layer 35. The thickness of polyethylene terephthalate layer 36 may be smaller than the thickness of nylon layer 35. For example, the thickness of nylon layer 35 can be about 15 µm to about 25 µm, and the thickness of polyethylene terephthalate layer 36 can be about 12 µm.

Here, the description "second resin layer 322 may have a higher strength than a strength of sealant resin layer 312 or first resin layer 321" means that the rigidity or tensile strength of second resin layer 322 is higher than that of sealant resin layer 312 or first resin layer 321, thereby suitably preventing breakage of second metal layer 320 when second sheet 32 receive external force such as penetration. Moreover, since second sheet 32 includes the second resin layer having the higher strength than that of sealant resin layer 312 or first resin layer 321, the strength of second sheet 32 as a whole becomes high, thereby suitably preventing breakage of second sheet 32 at the time of deep-drawing forming. Further, second resin layer 322 may be obtained by stacking a polypropylene layer and nylon layer 35. In this case, the polypropylene layer is disposed as the outermost layer. The thickness of the polypropylene layer may be larger than the thickness of nylon layer 35. For example, the thickness of nylon layer 35 can be about 25 µm, and the thickness of the polypropylene layer can be about 30 µm to 70 µm. It should be noted that the thickness of each resin layer included in second resin layer 322 may be equal to or less than the half of the thickness of second metal layer 320.

First laminate sheet portion 21 has been subjected to the deep-drawing forming to have a substantially box shape with first laminate sheet portion 21 being joined to first conductive plate 18. Specifically, first laminate sheet portion 21 has a box shape that opens downward. A flange portion 21f bent outward is provided at an opening end of first laminate sheet portion 21.

Second laminate sheet portion 22 has been subjected to the deep-drawing forming to have a substantially box shape with second laminate sheet portion 22 being joined to second conductive plate 19. Specifically, second laminate sheet portion 22 has a box shape that opens upward. A flange portion 22f bent outward is provided at an opening end of second laminate sheet portion 22.

Thus, first laminate sheet portion 21 and second laminate sheet portion 22 are provided with accommodation recesses 21c, 22c to accommodate stacked-electrode assembly 10 therein. The respective peripheral edge portions of the upper and lower surfaces of stacked-electrode assembly 10 and the peripheral surface of stacked-electrode assembly 10 are covered with accommodation recesses 21c, 22c. Moreover, the central portion of the upper surface of stacked-electrode assembly 10 is covered with first conductive plate 18, and the central portion of the lower surface of stacked-electrode assembly 10 is covered with second conductive plate 19. Accommodation recesses 21c, 22c are constituted of, for example, embossed portions formed by embossing first laminate sheet portion 21 and second laminate sheet portion 22. It should be noted that accommodation recesses 21c, 22c are not limited to the embossed portions, and may be provided to accommodate stacked-electrode assembly 10. Moreover, it has been illustratively described above that the accommodation recesses are provided in both of first laminate sheet portion 21 and second laminate sheet portion 22; however, an accommodation recess may be provided in only one of first laminate sheet portion 21 and second laminate sheet portion 22.

First sheet 31 has an inner-side end portion 31i located on the center side of stacked-electrode assembly 10. Second sheet 32 has an inner-side end portion 32i located on the center side of stacked-electrode assembly 10. Each of resin layers 50 has an inner edge portion 50i located on the center side of stacked-electrode assembly 10, and an outer edge portion 50c.

In order to secure an insulation distance between each of first metal layer 310 of first sheet 31 and second metal layer 320 of second sheet 32 and each of first conductive plate 18 and second conductive plate 19, inner edge portions 50i are located on the center side of stacked-electrode assembly 10 with respect to inner-side end portions 31i, 32i.

First conductive plate 18 has an outer edge portion 18c, and second conductive plate 19 has an outer edge portion 19c. Inner-side end portions 31i, 32i are located on the center side of stacked-electrode assembly 10 with respect to outer edge portions 18c, 19c.

Each of portions at which first conductive plate 18 and second conductive plate 19 are overlapped with resin layers 50 is welded, thereby sealing a joining interface therebetween.

Outer edge portions 50c of resin layers 50 are located on the outer side with respect to outer edge portions 18c, 19c, but are not limited thereto, and outer edge portions 50c may be flush with outer edge portions 18c, 19c.

By joining first sheet 31 and second sheet 32 to first conductive plate 18 and second conductive plate 19 with resin layers 50 being interposed therebetween, a short circuit between first conductive plate 18 and second conductive plate 19 via first sheet 31 and second sheet 32 each having the metal layer is suppressed.

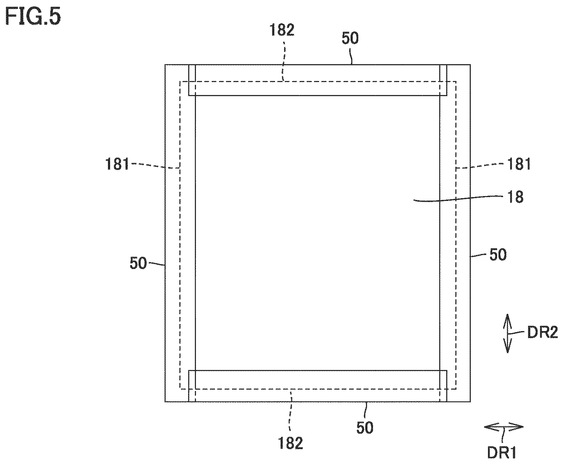

Each of Figs. 5 to 7 is a diagram showing a predetermined step of a step of producing first laminate sheet portion 21 according to the first embodiment. First laminate sheet portion 21 will be described in detail with reference to Figs. 5 to 7. It should be noted that the configuration of second laminate sheet portion 22 is substantially the same as the configuration of first laminate sheet portion 21, and therefore will not be described.

Fig. 5 is a diagram showing a step of disposing resin layers on the peripheral edge of the first conductive plate in the step of producing first laminate sheet portion 21 according to the first embodiment.

As shown in Fig. 5, when producing first laminate sheet portion 21, first, first conductive plate 18 and the plurality of resin layers 50 are prepared.

First conductive plate 18 has a rectangular shape having angular portions at four corners. First conductive plate 18 has a pair of first side portions 181 and a pair of second side portions 182.

The pair of first side portions 181 faces each other in a first direction (DR1 direction). The pair of second side portions 182 faces each other in a second direction (DR2 direction).

Each of the plurality of resin layers 50 has a sheet shape. The plurality of resin layers 50 are disposed along the pair of first side portions 181 and the pair of second side portions 182 so as to cover the peripheral edge of first conductive plate 18. The plurality of resin layers 50 are disposed on one main surface of first conductive plate 18. On this occasion, the plurality of resin layers 50 may be welded and fixed to the one main surface of first conductive plate 18 by thermal pressing or the like.

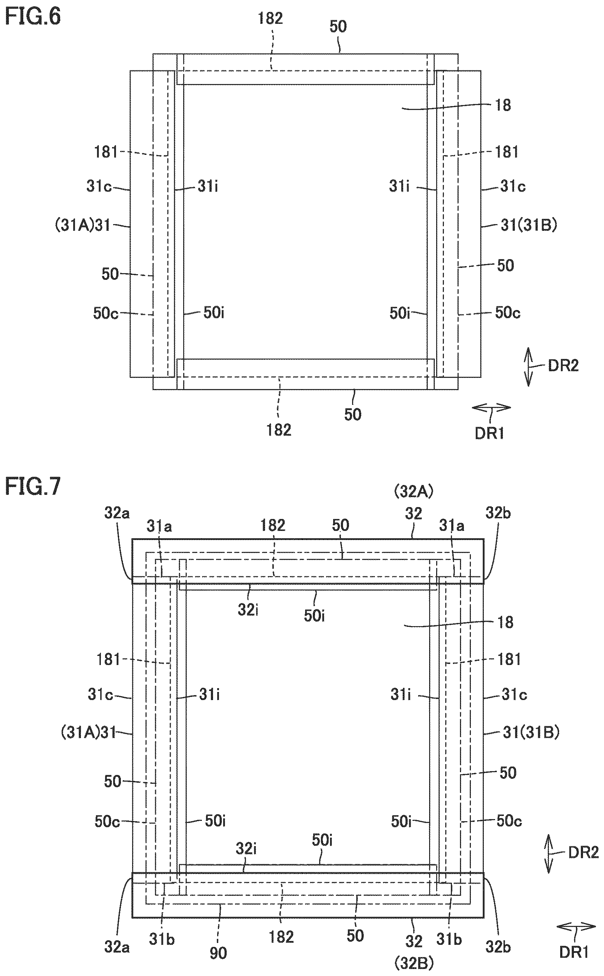

Fig. 6 is a diagram showing a step of disposing first sheets in the step of producing first laminate sheet portion 21 according to the first embodiment.

As shown in Fig. 6, first sheets 31 are disposed on one side and the other side in the first direction along first side portions 181 between the pair of second side portions 182. Specifically, a first sheet 31A is disposed on the one side in the first direction in which the pair of first side portions 181 face each other, and a first sheet 31B is disposed on the other side in the first direction in which the pair of first side portions 181 face each other.

Each of first sheet 31A and first sheet 31B has inner-side end portion 31i and outer-side end portion 31c. Inner-side end portion 31i is located on the center side of first conductive plate 18 with respect to outer-side end portion 31c.

Each of first sheet 31A and first sheet 31B is disposed on resin layer 50 such that outer-side end portion 31c is located on the outer side with respect to resin layer 50. In this state, inner edge portion 50i of resin layer 50 is located on the center side of first conductive plate 18 with respect to inner-side end portion 31i. Thus, as described above, the insulation distance between first conductive plate 18 and first metal layer 310 of each of first sheets 31A, 31B is secured.

Each of first sheets 31A, 31B is disposed such that sealant resin layer 311 is in abutment with resin layer 50 and sealant resin layer 312 is located on the side opposite to the side on which resin layer 50 is located. It should be noted that each of first sheets 31 is also disposed on the second conductive plate 19 side in substantially the same manner as described above.

Fig. 7 is a diagram showing a step of disposing second sheets 32 in the step of producing first laminate sheet portion 21 according to the first embodiment.

As shown in Fig. 7, second sheets 32 are disposed on one side and the other side in the second direction along second side portions 182 so as to cover the angular portions, which are located on the both sides in the first direction, of first conductive plate 18.

Second sheets 32 cover the peripheral edge of first conductive plate 18 together with first sheets 31 in a state in which a part of each of first resin layers 321 is overlapped with a corresponding one of sealant resin layers 312 of first sheets 31. When viewed in the stacking direction, second sheets 32 are overlapped with first sheets 31 at the respective angular portions of first conductive plate 18. First side portion 181 at a portion at which first sheet 31 and second sheet 32 are not overlapped with each other is covered only with first sheet 31, and second side portion 182 at a portion at which first sheet 31 and second sheet 32 are not overlapped with each other is covered only with second sheet 32.

A second sheet 32A is disposed on the one side in the second direction in which the pair of second side portions 182 face each other, and a second sheet 32B is disposed on the other side in the second direction. Each of second sheets 32A, 32B has: one-side end portion 32a located on the one side in the first direction in which the pair of first side portions 181 face each other; and an other-side end portion 32b located on the other side in the first direction. Each of first sheets 31A, 31B has: one-side end portion 31a located on the one side in the second direction in which the pair of second side portions 182 face each other; and an other-side end portion 31b located on the other side in the first direction.

Second sheet 32A and second sheet 32B are disposed on resin layers 50 and on first sheet 31A and first sheet 31B such that outer-side end portions 32c are located on the outer side with respect to resin layers 50. In this state, inner edge portions 50i of resin layers 50 are located on the center side of first conductive plate 18 with respect to inner-side end portions 32i of second sheets 32. Thus, the insulation distance between first conductive plate 18 and first metal layer 310 of each of second sheets 32A, 32B is secured.

The one-side end portion 32a side and other-side end portion 32b side of second sheet 32A are overlapped with one-side end portion 31a of first sheet 31A and one-side end portion 31a of first sheet 31B, respectively.

Similarly, one-side end portion 32a and other-side end portion 32b of second sheet 32B are overlapped with other-side end portion 31b of first sheet 31A and other-side end portion 31b of first sheet 31B, respectively. It should be noted that second sheets 32 are also disposed on the second conductive plate 19 side in substantially the same manner as described above.

First sheets 31 and the second sheets are combined and joined together so as to cover each of the peripheral edges of first conductive plate 18 and second conductive plate 19 in this way; however, no clearance is formed between each of first conductive plate 18 and second conductive plate 19 and each of first metal layer 310 and second metal layer 320, thereby suitably suppressing moisture, air, or the like from entering the inside of exterior package 20. That is, as shown in Fig. 7, when viewed in the first direction, the metal layers are present in all the portions of a first laminate sheet body constituted of first conductive plate 18, first sheets 31, and second sheets 32, and a second laminate sheet body constituted of second conductive plate 19, first sheets 31, and second sheets 32.

In the state in which resin layers 50, the plurality of first sheets 31, and the plurality of second sheets 32 are disposed, heat and pressure (thermal pressing) are applied to their overlapping portions using a heater or the like, thereby thermally welding resin layers 50, sealant resin layers 311, 312, and first resin layers 321, which have meltability to one another. Thus, the plurality of first sheets 31 and the plurality of second sheets 32 are fixed to first conductive plate 18 with resin layers 50 being interposed therebetween.

It should be noted that it has been illustratively described above that the plurality of first sheets 31 and second sheets 32 are fixed to first conductive plate 18 at the same time; however, it is not limited thereto. First, first sheets 31 may be welded and fixed to resin layers 50 by thermal pressing or the like in a state in which first sheets 31 are disposed on resin layers 50. Thereafter, second sheets 32 may be disposed on first sheets 31 and resin layers 50, and second sheets 32 may be welded and fixed to resin layers 50 and first sheets 31 by thermal pressing or the like. In this way, the plurality of first sheets 31 and the plurality of second sheets 32 may be sequentially fixed to first conductive plate 18.

The plurality of first sheets 31 and the plurality of second sheets 32 are fixed to first conductive plate 18 with resin layers 50 being interposed therebetween, thereby forming the first laminate sheet body. The first laminate sheet body is subjected to deep-drawing forming. Thus, the plurality of first sheets 31, second sheets 32, and first conductive plate 18 are embossed to have a substantially box shape, thereby forming an upper case. It should be noted that in the case of the deep-drawing forming, a region surrounded by a processing line 90 indicated by a chain double-dashed line in Fig. 7 is pressed by a punch, thereby forming a corner portion of the embossed portion in each of second sheets 32.

Also on the second conductive plate 19 side, in substantially the same configuration as that on the first conductive plate 18 side, the plurality of first sheets 31 and second sheets 32 are fixed to second conductive plate 19 with resin layers 50 being interposed therebetween, thereby forming the second laminate sheet body. The second laminate sheet body is subjected to deep-drawing forming. More specifically, the plurality of first sheets 31 and the plurality of second sheets 32 surrounding second conductive plate 19 in the form of a frame are subjected to the deep-drawing forming. Thus, the plurality of first sheets 31, second sheets 32, and second conductive plate 19 are embossed to have a substantially box shape, thereby forming a lower case. Also on the second conductive plate 19 side, a region surrounded by a processing line 90 is pressed by a punch in the same manner as described above, thereby forming a corner portion of the embossed portion in each of second sheets 32.

Power storage module 1, which is constituted of stacked-electrode assembly 10 and resin sealing body 40, is accommodated between the upper case and the lower case and flange portion 21f of the upper case and flange portion 22f of the lower case are thermally welded, thereby forming stacked-type battery 100 according to the embodiment.

In a state in which power storage module 1 is accommodated in the upper case and the lower case, first conductive plate 18 of the upper case is in contact with positive-electrode terminal electrode 16, and first conductive plate 18 is electrically connected to the positive-electrode terminal electrode. Moreover, second conductive plate 19 of the lower case is in contact with negative-electrode terminal electrode 17, and second conductive plate 19 is electrically connected to negative-electrode terminal electrode 17. Thus, each of first conductive plate 18 and second conductive plate 19 can be used as a terminal.

It should be noted that it has been illustratively described above that the first laminate sheet body and the second laminate sheet body are subjected to the deep-drawing forming, but it is not limited thereto. As long as stacked-electrode assembly 10 can be accommodated, the first laminate sheet body and/or the second laminate sheet body may be maintained to have a sheet shape without forming accommodation recesses 21c, 22c by the embossing. Moreover, the first laminate sheet body and/or the second laminate sheet body may be partially bent along the outer shape of power storage module 1 accommodated therein.

As described above, in the present embodiment, the plurality of first sheets 31 and the plurality of second sheets 32 cover each of the peripheral edge of first conductive plate 18 and the peripheral edge of second conductive plate 19 together in a state in which a part of each of first resin layers 321 is overlapped with a part of a corresponding one of sealant resin layers 312.

Sealant resin layer 312 and first resin layer 321 have meltability to each other, and sealant resin 311 layer and first resin layer 321 are melted to each other and joined to each other. Thus, the sealing properties of first laminate sheet portion 21 and second laminate sheet portion 22 can be maintained in an excellent manner.

Moreover, since each of second sheets 32 is provided with second resin layer 322 having a higher strength than that of each of sealant resin layers 311, 312, it is possible to suppress breakage of each of first laminate sheet portion 21 and second laminate sheet portion 22, thereby improving the formability.

Further, since each of first conductive plate 18 and second conductive plate 19 is disposed in contact with the terminal electrode of stacked-electrode assembly 10 and is electrically connected to the terminal electrode, current can be extracted in the stacking direction, and first conductive plate 18 and second conductive plate 19 are constituted of members different from stacked-electrode assembly 10. Therefore, as compared with a case where each of first laminate sheet portion 21 and second laminate sheet portion 22 is directly joined to the peripheral edge of stacked-electrode assembly 10, stacked-electrode assembly 10 does not need to be discarded when a failure of joining occurs when joining first laminate sheet portion 21 and second laminate sheet portion 22 to first conductive plate 18 and second conductive plate 19.

In general, at the corner portion in the embossing (deep-drawing forming), first laminate sheet portion 21 and second laminate sheet portion 22 are pulled in various directions at the time of processing, with the result that stress is applied thereto to facilitate breakage. In the present embodiment, for example, in each of second sheets 32 that cover the plurality of angular portions of each of first conductive plate 18 and second conductive plate 19, the thickness of second metal layer 320 is thicker than the thickness of first metal layer 310 of first sheet 31. Therefore, when embossing each of first laminate sheet portion 21 and second laminate sheet portion 22, it is possible to further suppress breakage of first laminate sheet portion 21 and second laminate sheet portion 22 (specifically, second sheet 32) at the corner portions of accommodation recesses 21c, 22c (embossed portions).

It should be noted that it has been illustratively described that the thickness of second metal layer 320 is thicker than that of first metal layer 310; however, it is not limited thereto and the thickness of second resin layer 322 may be thicker than that of first metal layer 310.

Further, since first sheets 31 are disposed along the pair of first side portions 181 and second sheets 32 are disposed along the pair of second side portions 182 as described above, each of the peripheral edges of first conductive plate 18 and second conductive plate 19 can be efficiently surrounded by the four sheets. Therefore, as compared with the configuration in which the central portion of a laminate sheet having a rectangular shape is cut off when forming the exterior package, loss of the laminate sheet is further reduced.

### (Second Embodiment)

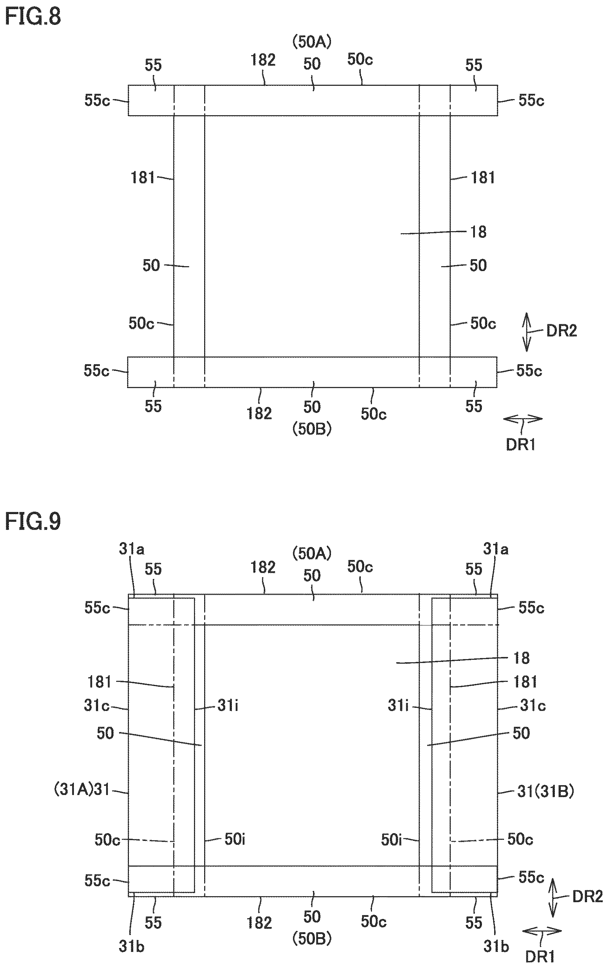

Each of Figs. 8 to 10 is a diagram showing a predetermined step in a step of producing a first laminate sheet portion 21 according to a second embodiment. A stacked-type battery according to the second embodiment will be described with reference to Figs. 8 to 10.

The stacked-type battery according to the second embodiment is different from stacked-type battery 100 according to the first embodiment in terms of the shape of each resin layer 50. The other configurations are substantially the same.

Fig. 8 is a diagram showing a step of disposing resin layers on the peripheral edge of the first conductive plate in the step of producing first laminate sheet portion 21 according to the second embodiment.

As shown in Fig. 8, in the second embodiment, each of resin layers 50A, 50B located on the one side and the other side in the second direction in which the pair of second side portions 182 face each other has protruding piece portions 55 at both ends in the first direction in which the pair of first side portions 181 face each other. Each of protruding piece portions 55 has an outer-side end portion 55c on the outer side in the first direction. Resin layers 50A, 50B located on the one side and the other side in the second direction are disposed along second side portions 182 such that protruding piece portions 55 protrude from first conductive plate 18 to both the outer sides in the first direction.

Resin layers 50 disposed on the side portions are disposed such that outer edge portions 50c substantially coincide with the side portions. Each of outer edge portions 50c may be located on the outer side with respect to the side portion.

Fig. 9 is a diagram showing a step of disposing first sheets in the step of producing first laminate sheet portion 21 according to the second embodiment.

First sheets 31 are disposed on the one side and the other side in the first direction along first side portions 181 between the pair of second side portions 182. Specifically, a first sheet 31A is disposed on the one side in the first direction in which the pair of first side portions 181 face each other, and a first sheet 31B is disposed on the other side in the first direction in which the pair of first side portions 181 face each other.

First sheet 31A and first sheet 31B are disposed along first side portions 181 so as to be located over protruding piece portions 55 located on the one side in the second direction (the side on which resin layer 50A is located) and protruding piece portions 55 located on the other side in the second direction (the side on which resin layer 50B is located).

First sheet 31A and first sheet 31B are disposed such that outer-side end portions 31c substantially coincide with outer-side end portions 55c of protruding piece portions 55. It should be noted that the position of each of outer-side end portions 31c may be deviated with respect to outer-side end portion 55c. First sheet 31A and first sheet 31B are disposed such that inner-side end portions 31i are located on resin layers 50. Each of inner edge portions 50i of resin layers 50 is located on the center side of first conductive plate 18 with respect to inner-side end portion 31i. Thus, as described above, the insulation distance between first conductive plate 18 and first metal layer 310 of each of first sheets 31A, 31B is secured.

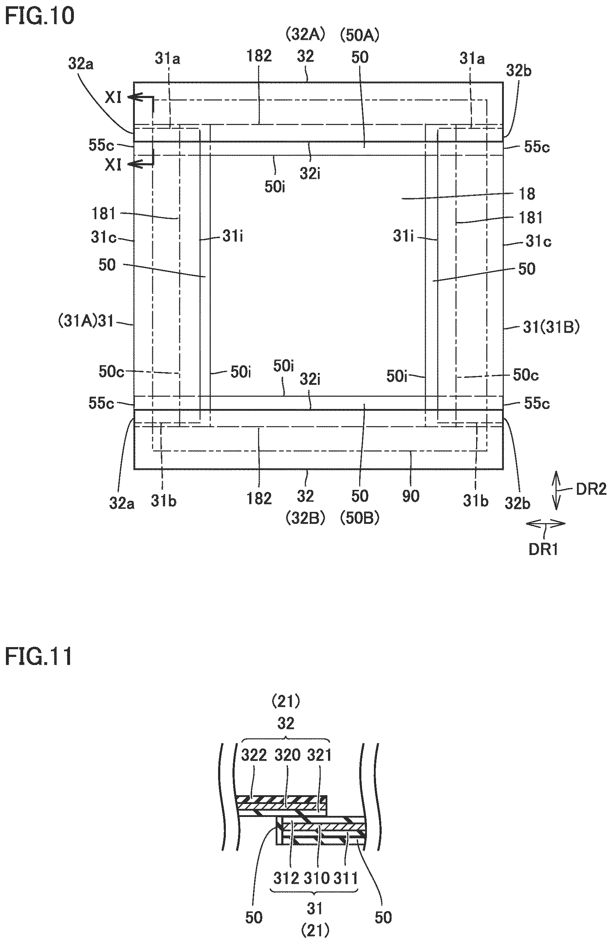

Fig. 10 is a diagram showing a step of disposing second sheets in the step of producing first laminate sheet portion 21 according to the second embodiment.

The plurality of second sheets 32 are disposed to cover the peripheral edge of first conductive plate 18 together with the plurality of first sheets 31 in a state in which a part of each of first resin layers 321 is overlapped with a corresponding one of sealant resin layers 312. When viewed in the stacking direction, second sheets 32 are overlapped with first sheets 31 at the angular portions of first conductive plate 18.

Second sheets 32 are disposed on the one side and the other side in the second direction along second side portions 182 so as to cover the angular portions, which are located on the both sides in the first direction, of first conductive plate 18. A second sheet 32A is disposed on the one side in the second direction in which the pair of second side portions 182 face each other, and a second sheet 32B is disposed on the other side in the second direction. Second sheets 32A, 32B are disposed such that one-side end portions 32a substantially coincide with outer-side end portions 55c of protruding piece portions 55 located on the one side in the first direction (the side on which resin layer 50A is located) and other-side end portions 32b substantially coincide with outer-side end portions 55c of protruding piece portions 55 located on the other side in the first direction (the side on which resin layer 50B is located). Second sheets 32 are disposed to be overlapped with first sheets 31 in substantially the same manner as in the first embodiment.

Each of inner edge portions 50i of resin layers 50 is located on the center side of first conductive plate 18 with respect to inner-side end portion 32i of second sheet 32. Thus, the insulation distance between first conductive plate 18 and second metal layer 320 of second sheet 32 is secured.

Fig. 11 is a cross sectional view along a line X-X shown in Fig. 10. Fig. 11 shows a cross section of a portion at which first sheet 31, second sheet 32, and resin layer 50 are overlapped on the one side in the second direction.

As shown in Fig. 11, since resin layer 50, first sheet 31, and second sheet 32 are disposed as described above, the end surface of first metal layer 310 in the second direction can be entirely covered with at least resin layer 50 when resin layer 50, first sheet 31, and second sheet 32 are thermally welded. Similarly, also on the other side in the second direction, the end surface of first metal layer 310 in the second direction can be entirely covered with at least resin layer 50. Thus, each of the both end surfaces of first metal layer 310 in the second direction is entirely covered with resin layer 50.

It should be noted that first sheets 31 and second sheets 32 are also disposed on the second conductive plate 19 side in the same manner as on the first conductive plate 18 side.

Also in the second embodiment, a first laminate sheet body constituted of the plurality of first sheets 31, the plurality of second sheets 32, and first conductive plate 18, and a second laminate sheet body constituted of the plurality of first sheets 31, the plurality of second sheets 32, and second conductive plate 19 are embossed. Power storage module 1 is accommodated using the embossed first laminate sheet body and second laminate sheet body, thereby producing the stacked-type battery according to the second embodiment.

Also when configured as described above, the stacked-type battery according to the second embodiment can attain substantially the same effect as that of stacked-type battery 100 according to the first embodiment. Moreover, since each of both the end surfaces of first metal layer 310 with which second sheet 32 is overlapped is covered with resin layer 50, it is possible to suppress occurrence of unintended short circuit via the end surface.

### (Third Embodiment)

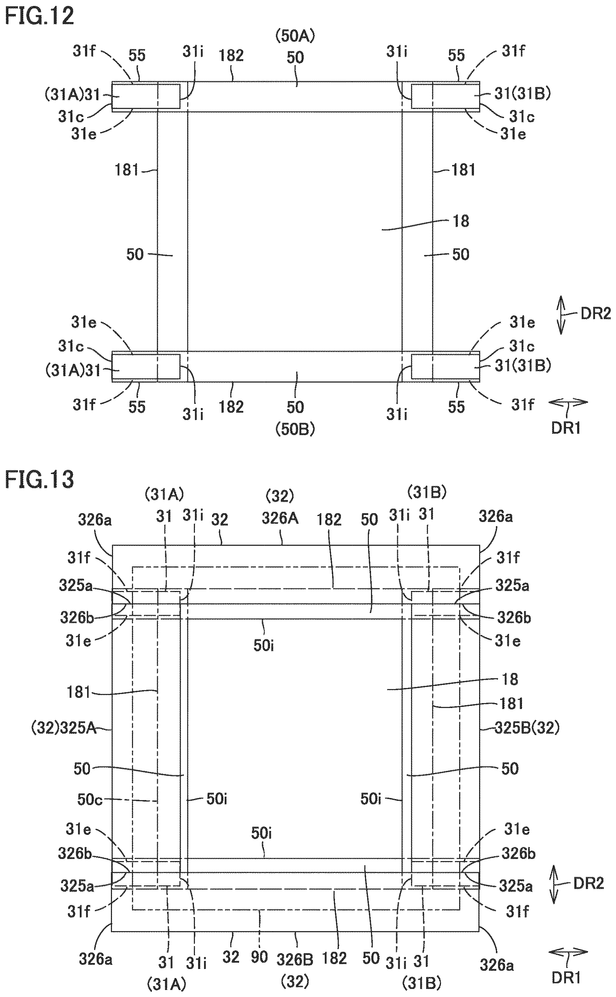

Each of Figs. 12 and 13 is a diagram showing a predetermined step in a step of producing a first laminate sheet portion 21 according to a third embodiment. A stacked-type battery according to the third embodiment will be described with reference to Figs. 12 and 13.

The stacked-type battery according to the third embodiment is different from the stacked-type battery according to the second embodiment in terms of the shape of each of first sheets 31 and the arrangement of first sheets 31 and second sheets 32. The other configurations are substantially the same.

Fig. 12 is a diagram showing a step of disposing first sheets in the step of producing first laminate sheet portion 21 according to the third embodiment.

First sheets 31 are respectively disposed to protrude outward in the first direction from the plurality of angular portions of first conductive plate 18. Specifically, first sheets 31 are disposed on protruding piece portions 55 such that inner-side end portions 31i are overlapped with the angular portions. Each of first sheets 31 also has an inner-side end portion 31e and an outer-side end portion 31f in the second direction in which the pair of second side portions 182 face each other. Inner-side end portion 31e is located on the side, on which the central portion of first conductive plate 18 is located, with respect to outer-side end portion 31f. A pair of first sheets 31A are disposed on the one side in the first direction with a space being interposed therebetween in the second direction. A pair of first sheets 31B are disposed on the other side in the first direction with a space being interposed therebetween in the second direction.

Fig. 13 is a diagram showing a step of disposing second sheets in the step of producing first laminate sheet portion 21 according to the third embodiment.

The plurality of second sheets 32 are disposed to cover the peripheral edge of first conductive plate 18 together with the plurality of first sheets 31 in a state in which a part of each of first resin layers 321 is overlapped with a corresponding one of sealant resin layers 312. When viewed in the stacking direction, second sheets 32 are overlapped with first sheets 31 at the angular portions of first conductive plate 18.

The plurality of second sheets 32 include: a pair of first-side-portion-side sheets 325A, 325B disposed along the pair of first side portions 181; and a pair of second-side-portion-side sheets 326A, 326B disposed along the pair of second side portions 182.

First-side-portion-side sheet 325A is disposed on the one side in the first direction in which the pair of first side portions 181 face each other. First-side-portion-side sheet 325B is disposed on the other side in the first direction. Each of first-side-portion-side sheets 325A, 325B has end portions 325a on the both sides in the second direction in which the pair of second side portions 182 face each other.

Second-side-portion-side sheet 326A is disposed on the one side in the second direction. Second-side-portion-side sheet 326B is disposed on the other side in the second direction. Each of second-side-portion side sheets 326A, 326B has end portions 326a on the both sides in the first direction. Moreover, each of second-side-portion-side sheets 326A, 326B has inner-side end portions 326b on the center side of first conductive plate 18.

First-side-portion-side sheet 325A is disposed on resin layer 50 so as to be located over the pair of first sheets 31A disposed with a space being interposed therebetween in the second direction. Both end portions 325a of first-side-portion-side sheet 325A are disposed so as to cover inner-side end portions 31e of each of the pair of first sheets 31.

First-side-portion-side sheet 325B is disposed on resin layer 50 so as to be located over the pair of first sheets 31B disposed with a space being interposed therebetween in the second direction. Both end portions 325a of first-side-portion-side sheet 325B are disposed so as to cover inner-side end portions 31e of each of the pair of first sheets 31B.

Second-side-portion-side sheet 326A is disposed on resin layer 50 so as to be located over the pair of first sheets 31A, 31B disposed with a space being interposed therebetween in the first direction. Inner-side end portion 326b of second-side-portion-side sheet 326A is disposed so as to cover outer-side end portion 31f of each of the pair of first sheets 31A, 31B. Inner-side end portion 326b is in alignment with end portion 325a.

Second-side-portion-side sheet 326B is disposed on resin layer 50 so as to be located over the pair of first sheets 31A, 31B disposed with a space being interposed therebetween in the first direction. Inner-side end portion 326b of second-side-portion-side sheet 326B is disposed so as to cover outer-side end portion 31f of each of the pair of first sheets 31A, 31B. Inner-side end portion 326b is in alignment with end portion 325a.

Since second sheets 32 are disposed in this way, second sheets 32 can be stably disposed to be overlapped with first sheets 31 even when the area of each of first sheets 31 is small.

Inner edge portion 50i of resin layer 50 is located on the center side of first conductive plate 18 with respect to inner-side end portion 326b of second sheet 32. Thus, the insulation distance between first conductive plate 18 and second metal layer 320 of second sheet 32 is secured.

It should be noted that first sheets 31 and second sheets 32 are also disposed on the second conductive plate 19 side in the same manner as on the first conductive plate 18 side.

Also in the third embodiment, a first laminate sheet body constituted of the plurality of first sheets 31, the plurality of second sheets 32, and first conductive plate 18, and a second laminate sheet body constituted of the plurality of first sheets 31, the plurality of second sheets 32, and second conductive plate 19 are embossed. Power storage module 1 is accommodated using the embossed first laminate sheet body and second laminate sheet body, thereby producing the stacked-type battery according to the third embodiment.

Also when configured as described above, the stacked-type battery according to the third embodiment can attain substantially the same effect as that of the stacked-type battery according to the second embodiment.

### (Fourth Embodiment)

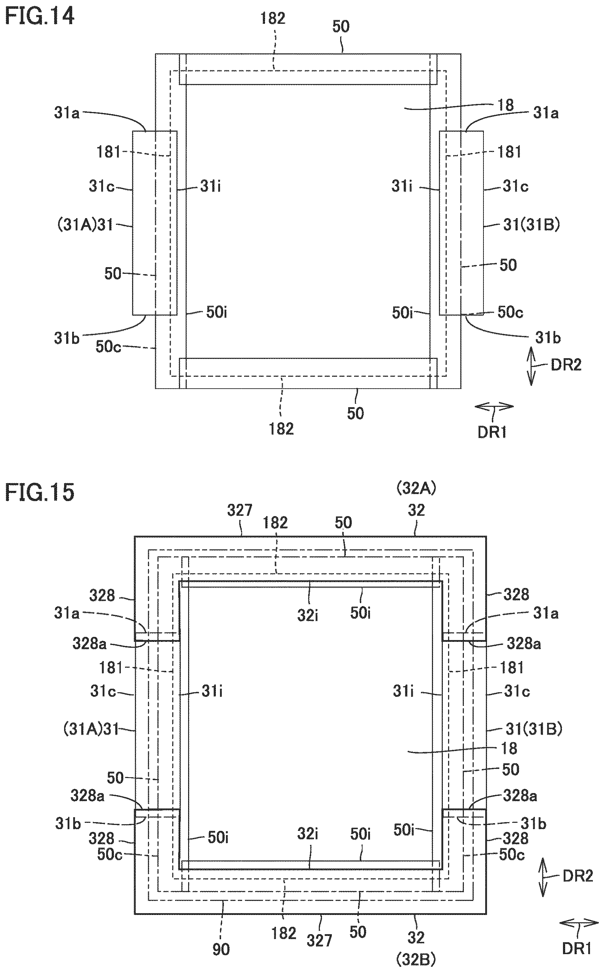

Each of Figs. 14 and 15 is a diagram showing a predetermined step in a step of producing a first laminate sheet portion 21 according to a fourth embodiment. A stacked-type battery according to the fourth embodiment will be described with reference to Figs. 14 and 15.

The stacked-type battery according to the fourth embodiment is different from stacked-type battery 100 according to the first embodiment in that each of first sheets 31 has a short length and each of second sheets 32 has a different shape.

Fig. 14 is a diagram showing a step of disposing first sheets in the step of producing first laminate sheet portion 21 according to the fourth embodiment.

As shown in Fig. 14, first sheets 31 are disposed on the one side and the other side in the first direction along first side portions 181 between the pair of second side portions 182. A first sheet 31A is disposed on the one side in the first direction in which the pair of first side portions 181 face each other, and a first sheet 31B is disposed on the other side in the first direction in which the pair of first side portions 181 face each other. First sheets 31A, 31B are disposed so as not to reach the pair of second side portions 182. That is, the length of each of first sheets 31A, 31B in the second direction is shorter than the length of each of first side portions 181.

Fig. 15 is a diagram showing a step of disposing second sheets in the step of producing first laminate sheet portion 21 according to the fourth embodiment.

The plurality of second sheets 32 are disposed to cover the peripheral edge of first conductive plate 18 together with the plurality of first sheets 31 in a state in which a part of each of first resin layers 321 is overlapped with a corresponding one of sealant resin layers 312. When viewed in the stacking direction, the angular portions of first conductive plate 18 are covered with only second sheets 32. Second sheets 32 are overlapped with first sheets 31 on first side portions 181.

A second sheet 32A is disposed on one side in the second direction in which the pair of second side portions 182 face each other, and a second sheet 32B is disposed on the other side in the second direction.

Second sheet 32A has: a base portion 327 extending along second side portion 182; and protruding portions 328 protruding toward first sheets 31A, 31B from the both end portions of base portion 327 in the first direction. Protruding portions 328 extend along first side portions 181. The tip 328a sides of protruding portions 328 cover one-side end portions 31a of first sheets 31A, 31B.

Second sheet 32B has: a base portion 327 extending along second side portion 182; and protruding portions 328 protruding toward first sheets 31A, 31B from both end portions of base portion 327 in the first direction. Protruding portions 328 extend along first side portions 181. The tip 328a sides of protruding portions 328 cover other-side end portions 31b of first sheets 31A, 31B.

Inner edge portion 50i of each resin layer 50 is located on the center side of first conductive plate 18 with respect to inner-side end portion 31i of each of first sheets 31 and inner-side end portion 32i of each of second sheets 32. Thus, the insulation distance between first conductive plate 18 and each of first metal layer 310 of first sheet 31 and second metal layer 320 of second sheet 32 is secured.

It should be noted that first sheets 31 and second sheets 32 are also disposed on the second conductive plate 19 side in the same manner as on the first conductive plate 18 side.

Also in the fourth embodiment, a first laminate sheet body constituted of the plurality of first sheets 31, the plurality of second sheets 32, and first conductive plate 18, and a second laminate sheet body constituted of the plurality of first sheets 31, the plurality of second sheets 32, and second conductive plate 19 are embossed. Power storage module 1 is accommodated using the embossed first laminate sheet body and second laminate sheet body, thereby producing the stacked-type battery according to the fourth embodiment.

Also when configured as described above, the stacked-type battery according to the fourth embodiment can attain substantially the same effect as that of stacked-type battery 100 according to the first embodiment. Moreover, since each of first sheets 31 and each of second sheets 32 have the above-described shapes, a joint between first sheet 31 and second sheet 32 can be avoided from being located at a portion that is likely to be creased due to stress caused by stretching during the embossing. Since the position of the joint is separated from the corner portion of the embossed portion in this way, the crease during the embossing can be reduced while minimizing loss in punching the laminate sheet.

### (Fifth Embodiment)

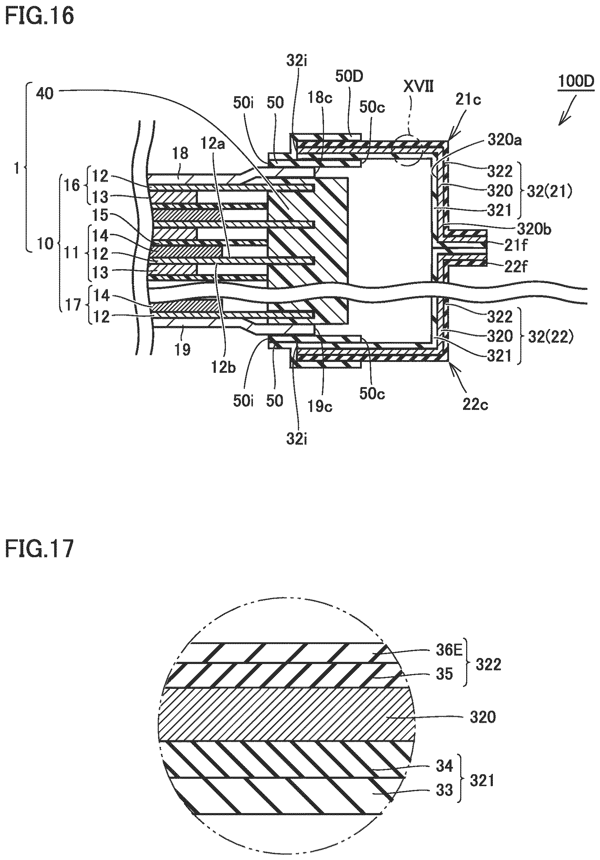

Fig. 16 is a cross sectional view of a stacked-type battery according to a fifth embodiment. It should be noted that Fig. 16 is a cross sectional view corresponding to the cross sectional view along line III-III. Referring to Fig. 16, a stacked-type battery 100D according to the fifth embodiment will be described.

As shown in Fig. 16, stacked-type battery 100D according to the fifth embodiment is different from stacked-type battery 100 according to the first embodiment in that an outer-side resin layer 50D is included. The other configurations are substantially the same.

Outer-side resin layer 50D covers inner-side end portion 32i of second sheet 32 on each of the outer edge portion 18c side of first conductive plate 18 and the outer edge portion 19c side of second conductive plate 19. Specifically, outer-side resin layer 50D is disposed on resin layer 50 and on second sheet portion 32 so as to cover inner-side end portion 32i of second sheet 32.

Although not shown here, also on the first sheet 31 side, outer-side resin layer 50D covers inner-side end portion 31i of first sheet 31 on each of the outer edge portion 18c side of first conductive plate 18 and the outer edge portion 19c side of second conductive plate 19. Specifically, outer-side resin layer 50D is disposed on resin layer 50 and on first sheet 31 so as to cover inner-side end portion 31i of first sheet 31.

Since outer-side resin layer 50D covers each of first metal layer 310 and second metal layer 320 exposed from inner-side end portions 31i, 32i, a short circuit between each of first conductive plate 18 and second conductive plate 19 and each of first sheet 31 and second sheet 32 can be suppressed.

Fig. 17 is a cross sectional view of the second sheet in a region surrounded by XVII shown in Fig. 16. As shown in Fig. 17, in the fifth embodiment, the outermost layer of second resin layer 322 is composed of a resin material having meltability to outer-side resin layer 50D. Specifically, second resin layer 322 includes a polypropylene layer 36E as the outermost layer, and polypropylene layer 36E is stacked on nylon layer 35. Polypropylene layer 36E has meltability to outer-side resin layer 50D disposed on second resin layer 322. Therefore, by welding polypropylene layer 36E and outer-side resin layer 50D to each other, sealing performance can be improved, and the above-described short circuit can be effectively suppressed.

The thickness of polypropylene layer 36E may be larger than the thickness of nylon layer 35. For example, the thickness of nylon layer 35 can be about 25 µm, and the thickness of polypropylene layer 36E can be about 30 µm to 70 µm. In this case, in first resin layer 321, the thickness of the polypropylene layer disposed as the outermost surface may be about 30 µm, and the thickness of the modified polypropylene disposed between the polypropylene and second metal layer 320 may be about 30 µm. That is, the thickness of each resin layer of second resin layer 322 may be equal to or less than the half of the thickness of second metal layer 320.

Also when thus configured, stacked-type battery 100D according to the fifth embodiment can attain the same effect as that of stacked-type battery 100 according to the first embodiment.

### (Sixth Embodiment)

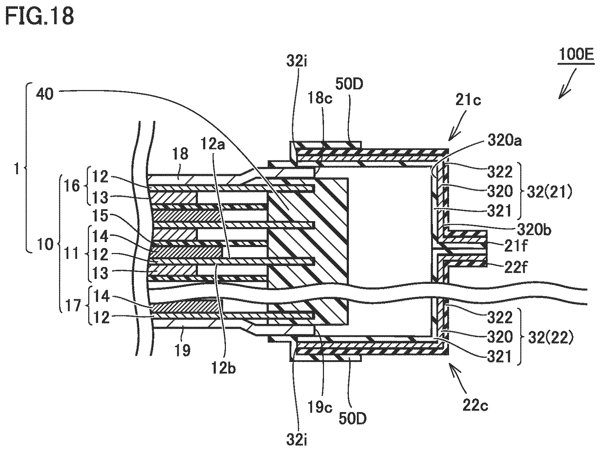

Fig. 18 is a cross sectional view of a stacked-type battery according to a sixth embodiment. It should be noted that Fig. 18 is a cross sectional view corresponding to the cross sectional view along line III-III. Referring to Fig. 18, a stacked-type battery 100E according to the seventh embodiment will be described.

As shown in Fig. 18, a stacked-type battery 100E according to the sixth embodiment is different from stacked-type battery 100D according to the fifth embodiment in that no resin layer 50 is provided.

Since no resin layer 50 is provided in the sixth embodiment, second sheets 32 are directly joined to the outer edge of first conductive plate 18 and the outer edge of second conductive plate 19. That is, first resin layers 321 of second sheets 32 are directly joined to first conductive plate 18 and second conductive plate 19.

Although not shown here, first sheets 31 are also directly joined to the outer edge of first conductive plate 18 and the outer edge of second conductive plate 19 on the first sheet 31 side. That is, sealant resin layers 311 of first sheets 31 are directly joined to first conductive plate 18 and second conductive plate 19.

In this case, as each of sealant resin layers 311 and first resin layers 321, modified polypropylene (more specifically, acid-modified polypropylene) having higher adhesion to a metal than that of polypropylene can be employed. With no resin layer 50 provided, the number of components can be reduced, productivity can be improved, and production cost can be reduced.

It should be noted that in each of the first to sixth embodiments described above, it has been illustratively described that the plurality of first sheets 31 and the plurality of second sheets cover each of the peripheral edge of first conductive plate 18 and the peripheral edge of second conductive plate 19 together; however, it is not limited thereto. The number of first sheets 31 may be one or more and the number of second sheets 32 may be one or more as long as first sheet(s) 31 and second sheet(s) 32 can cover each of the peripheral edge of first conductive plate 18 and the peripheral edge of second conductive plate 19 together. For example, one first sheet 31 may cover each of a part of the peripheral edge of first conductive plate 18 and a part of the peripheral edge of second conductive plate 19, and one second sheet 32 may cover each of another part of the peripheral edge of first conductive plate 18 and another part of second conductive plate 19.

The embodiments disclosed herein are illustrative and non-restrictive in any respect. The scope of the present invention is defined by the terms of the claims, and includes any modifications within the scope and meaning equivalent to the terms of the claims.

### REFERENCE SIGNS LIST

1 power storage module; 10 stacked-electrode assembly; 11 electrode plate; 12 current collector; 12a first surface; 12b second surface; 13 positive electrode layer; 14 negative electrode layer; 15 separator; 16 positive-electrode terminal electrode; 17 negative-electrode terminal electrode; 18 first conductive plate; 18c outer edge portion; 19 second conductive plate; 19c outer edge portion; 20 exterior package; 21 first laminate sheet portion; 21c, 22c accommodation recess; 21f flange portion; 22 second laminate sheet portion; 22f flange portion; 31, 31A, 31B first sheet; 31a one-side end portion; 31b other-side end portion; 31c outer-side end portion; 31e inner-side end portion; 31f outer-side end portion; 31i inner-side end portion; 32, 32A, 32B second sheet; 32a one-side end portion; 32b other-side end portion; 32c outer-side end portion; 32i inner-side end portion; 33 polypropylene layer; 34 modified polypropylene layer; 35 nylon layer; 36 polyethylene terephthalate layer; 36E polypropylene layer; 40 resin sealing body; 50, 50A, 50B resin layer; 50c outer edge portion; 50D outer-side resin layer; 55 protruding piece portion; 90 processing line; 100 stacked-type battery; 181 first side portion; 182 second side portion; 310 first metal layer; 311, 312 sealant resin layer; 320 second metal layer; 320a first main surface; 320b second main surface; 321 first resin layer; 322 second resin layer; 325A, 325B first-side-portion-side sheet; 325a, 326a end portion; 326A, 326B second-side-portion-side sheet; 326b inner-side end portion; 327 base portion; 328 protruding portion; 328a tip.

## Claims

1. A stacked-type battery comprising:
a stacked-electrode assembly including a plurality of electrodes stacked in a stacking direction; and
an exterior package that accommodates the stacked-electrode assembly, wherein
the exterior package includes
a first conductive plate provided on one surface of the stacked-electrode assembly in the stacking direction,
a second conductive plate provided on the other surface of the stacked-electrode assembly in the stacking direction,
a first laminate sheet portion joined to a peripheral edge of the first conductive plate, and
a second laminate sheet portion joined to a peripheral edge of the second conductive plate,
each of the first laminate sheet portion and the second laminate sheet portion includes one or more first sheets and one or more second sheets, and
the one or more first sheets and the one or more second sheets cover each of the peripheral edge of the first conductive plate and the peripheral edge of the second conductive plate together in a state in which a part of each of the second sheets is overlapped with a part of a corresponding one of the first sheets.

2. The stacked-type battery according to claim 1, wherein
each of the first sheets has a first metal layer and a sealant resin layer provided on each of both surfaces of the first metal layer,
each of the second sheets has a second metal layer having a first main surface and a second main surface, and a first resin layer provided on the first main surface side,
the first resin layer has meltability to the sealant resin layer,
the one or more first sheets and the one or more second sheets cover each of the peripheral edge of the first conductive plate and the peripheral edge of the second conductive plate together in a state in which a part of each of the first resin layers is overlapped with a part of a corresponding one of the sealant resin layers, and
the sealant resin layer of each of the first sheets and the first resin layer of a corresponding one of the second sheets are melted to each other.

3. The stacked-type battery according to claim 2, wherein
a side surface of the stacked-electrode assembly is sealed by a sealing body,
each of the first conductive plate and the second conductive plate has a plurality of angular portions when viewed in the stacking direction,
at least one of the first laminate sheet portion and the second laminate sheet portion has an embossed portion to accommodate the stacked-electrode assembly and the sealing body,
the one or more second sheets are disposed to cover the plurality of angular portions,
each of the second sheets has a second resin layer provided on the second main surface side,
the second resin layer is a resin layer having a higher strength than a strength of the sealant resin layer or the first resin layer, and
a corner portion of the embossed portion is formed in the second sheet.

4. The stacked-type battery according to claim 2, wherein
a resin layer having meltability to the sealant resin layer and the first resin layer is disposed between each of the one or more first sheets and the one or more second sheets and each of the peripheral edge of the first conductive plate and the peripheral edge of the second conductive plate,
each of the one or more first sheets and the one or more second sheets has an inner-side end portion on a side on which each of the peripheral edge of the first conductive plate and the peripheral edge of the second conductive plate is located, and
when viewed in the stacking direction, an inner edge portion of the resin layer is located on a center side of the stacked-electrode assembly with respect to the inner-side end portion.

5. The stacked-type battery according to any one of claims 1 to 4, wherein
the stacked-electrode assembly includes a positive-electrode terminal electrode located on one side in the stacking direction and a negative-electrode terminal electrode located on the other side in the stacking direction,
the positive-electrode terminal electrode includes a current collector plate having a first surface on the one side in the stacking direction,
the negative-electrode terminal electrode includes a current collector plate having a second surface on the other side in the stacking direction,
the first conductive plate is disposed in abutment with the first surface so as to be electrically connected to the positive-electrode terminal electrode, and
the second conductive plate is disposed in abutment with the second surface so as to be electrically connected to the negative-electrode terminal electrode.

6. The stacked-type battery according to claim 5, wherein
each of the first conductive plate and the second conductive plate has a rectangular shape including a pair of first side portions facing each other in a first direction and a pair of second side portions facing each other in a second direction orthogonal to the first direction,
in each of the first conductive plate and the second conductive plate, the first sheets are disposed on one side and the other side in the first direction along the first side portions between the pair of second side portions, and
in each of the first conductive plate and the second conductive plate, the second sheets are disposed on one side and the other side in the second direction along the second side portions so as to cover angular portions, which are located on the both sides in the first direction, of a corresponding one of the first conductive plate and the second conductive plate.

7. The stacked-type battery according to claim 6, wherein
each of the first sheets includes a first metal layer extending along the second direction, and
each of both end surfaces of the first metal layer in the second direction is covered with the resin layer.

8. The stacked-type battery according to claim 5, wherein
each of the first conductive plate and the second conductive plate has a rectangular shape including a pair of first side portions facing each other in a first direction and a pair of second side portions facing each other in a second direction orthogonal to the first direction,
each of the first sheets is disposed to protrude outward in the first direction from a corresponding one of a plurality of angular portions in each of the first conductive plate and the second conductive plate, and
the second sheets include a pair of first-side-portion-side sheets disposed along the pair of first side portions and a pair of second-side-portion-side sheets disposed along the pair of second side portions in each of the first conductive plate and the second conductive plate.
